# EUROPEAN PATENT APPLICATION

(11) **EP 2 214 284 A2**
(43) Date of publication of application: **04.08.2010**
(21) Application number: 10151874.4
(22) Date of filing: 28.01.2010
(51) Int. Cl.: H02J 3/38

(54) **Distributed generation power system**

(30) Priority: 28.01.2009 US 361475
(71) Applicant: UQM Technologies, Inc., Frederick, Colorado 80530 (US)
(72) Inventor: Zolot, Matthew D., Frederick, CO 85030 (US)
(74) Representative: Hegner, Anette

(57) **Abstract**

A distributed generation power system includes a utility meter connectable to an electric utility provider and configured to communicate with a communication device of the utility provider, an inverter configured to convert distributed generation (DG) power generated by a DG power source into AC power, and a connection mechanism configured to connect the meter and inverter to constitute an integrated inverter and meter. The integrated inverter and meter are configured to receive at least one operating command from the meter and/or the communication device of the utility provider. The integrated inverter and meter are configured to alter a control parameter of the operating state of the inverter and/or meter in accordance with the received operating command.

## Description

### FIELD OF THE DISCLOSURE

The present disclosure relates to a distributed generation power system having an integrated electric utility meter and inverter system, including the physical design, placement and interconnection of the integrated electric utility and inverter system.

### BACKGROUND

Recent scientific and political efforts have endeavored to reduce emissions of greenhouse gases into the earth's atmosphere. Proposals to limit carbon emission, impose caps on a country's carbon emissions, and tax entities based on their carbon emissions are gaining in popularity. In recent years, many renewable energy incentives and mandates have been introduced at local, state, federal and international levels.

One mainstream application of clean, renewable energy is through solar power, i.e., photovoltaic (PV) systems. Increasingly, PV installations are connected directly to conventional electrical utility grids for distributed residential and commercial applications, rather than off-grid, battery-backup dependent applications. However, without incentives and governmental mandates, nascent PV markets face economic difficulties in competing with conventional electricity production methods such as coal power plants.

Conventional PV installations involve design considerations across the full spectrum at an installation site, from the DC (direct current) solar energy source to the interconnection with the AC (alternating current) utility provider (hereinafter "utility provider"). According to the National Electric Code practices, this involves a variety of AC service modifications and/or upgrades, which increases costs for installation and implementation. Even without requiring AC services upgrades, distributed generation (DG) installations are commonly an afterthought in many commercial and residential sites, which can result in increased design and installation complexities and costs.

A factor in the costs of PV systems is that the distributed energy resource (DER) system operates independently, out of the direct control of the consumer and utility provider. Consequently, PV systems must meet a high standard of operation to guarantee that they do not cause safety, reliability or operational problems or incompatibilities with an existing electricity infrastructure. The costs of buying, installing or receiving energy from a DER system has, in effect, hampered the expansion of DER systems for residential and commercial applications. Furthermore, consumers of DER systems typically cannot expect to begin realization of economic gain, beyond their initial investment, before approximately ten to fifteen years, and often twenty years or more. Utility providers cannot expect to derive revenue from DER installations, other than meeting mandated renewable energy installation requirements, which are often mandated at the state or local level. Thus, in view of the respective business models of consumers and utility providers, it is often difficult to justify the use of rebates and/or incentives on the consumer side, or mandates imposed on the utility provider. Overall, the current state of PV installations is a segmented, piecemeal solution.

### DESCRIPTION OF THE RELATED ART

### (1) Conventional Grid Connection Implementations

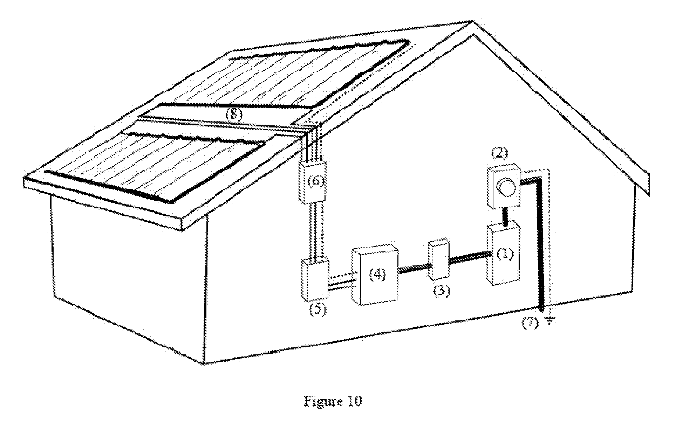

Figure 10 illustrates a conventional DG standard grid implementation. In this implementation, a meter 2 is connected to a utility grid of a utility provider via an electric utility feed 7. The meter 2 is also connected to an AC panel 1, which is connected to an AC disconnect 3. The AC disconnect 3 is connected to an inverter 4, which in turn is connected to a DC disconnect 5. The DC disconnect 5 is connected to a combiner 6, which is connected to a DG system 8 including one or more PV modules. In this conventional implementation, the inverter 4 is installed on the load side of the AC panel 1, which is the electrical distribution panel. The AC panel 1 can provide power to one or more loads at the site on which the AC panel 1 is installed. The inverter 4 converts DC energy generated by the DG system 8 into AC energy of a predetermined voltage and frequency according to local electrical codes or the mandate of the utility provider. When the DG system 8 is generating electricity, the inverter 4 back-feeds into a breaker within the AC panel 1. Power generated by the DG system 8 and converted by the inverter 4 can generally be directed on one of two paths: (1) to one or more loads via the AC panel 1, or (2) injected into the utility grid via the AC panel 1, meter 2 and electric utility feed 7. To conform to industry-accepted standards, i.e., IEEE 1547, the UL 1741, and the National Electric Code, the conventional DG system's 8 power rating cannot exceed 20% of the AC panel 1 rating. This installation practice can involve upgrades and/or modifications to the electrical utility feed 7, meter 2 and AC panel 1, depending on the power rating of the PV modules 8, the service amperage of the meter 2 and/or electric utility feed 7, or the breaker utilization in the AC panel 1.

In addition, with the DG system 8 installed on the load side of the AC panel 1, electric code enforcement can require the AC disconnect 3 for the DG system 8. Since PV power production is consumed by a combination of on-site loading and the injection of any remaining power into the utility grid, the AC disconnect 3 ensures that the inverter 4 is not supplying electricity to any load when the AC disconnect 3 is in the off position. Beyond this, and depending on local code enforcement, the DC cabling between the DG system 8 and the inverter 4 commonly requires a DC disconnect 5 either integrated into, or separate from, the inverter 4. The combiner 6 combines the power generated by the individual PV panels of the DG system 8, in part to match the voltage range of the inverter 4. It is also possible that the inverter 4 can be designed to have a voltage range within the voltage range resulting from the combination of the power generated by each PV panel of the DG system 8. The combiner 6 is known to perform various types of combinations, such as serial-to-parallel and parallel-to-serial.

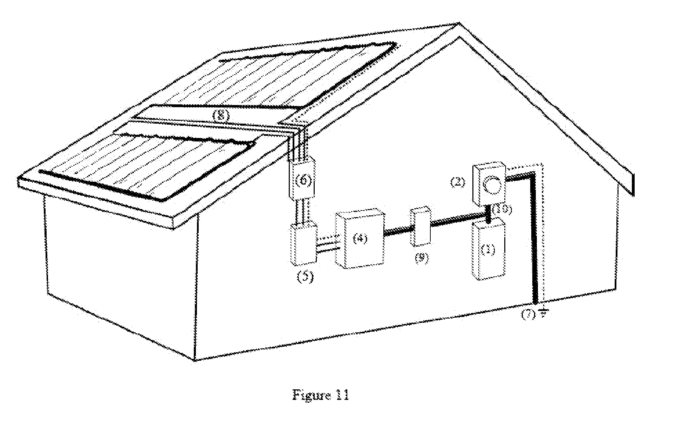

Figure 11 illustrates a conventional grid connection implementation that is referred to as a "line side tap." In this implementation, the inverter 4 is connected directly to the load side of the electrical utility feed 10, which is also known as the metered electrical utility feed. This installation method involves the use of AC fuses 9 that function as an AC disconnect for safety precautions. The AC fuses 9 are connected in parallel to the AC panel 1 and the meter 2. The AC panel 1 includes an integral main AC disconnect that enables the inverter 4 to be disconnected from local loads. The remaining elements in Figure 11 having the same reference numeral as those in Figure 10 perform similar functions to the elements described above with respect to Figure 10. The line side tap implementation illustrated in Figure 11 permits the DG system 8 to have a power rating greater than 20% of the AC panel 1 rating, without upgrading the electrical service amperage of the meter 2 or the electric utility feed 7, in contrast to the conventional DG standard grid implementation illustrated in Figure 10.

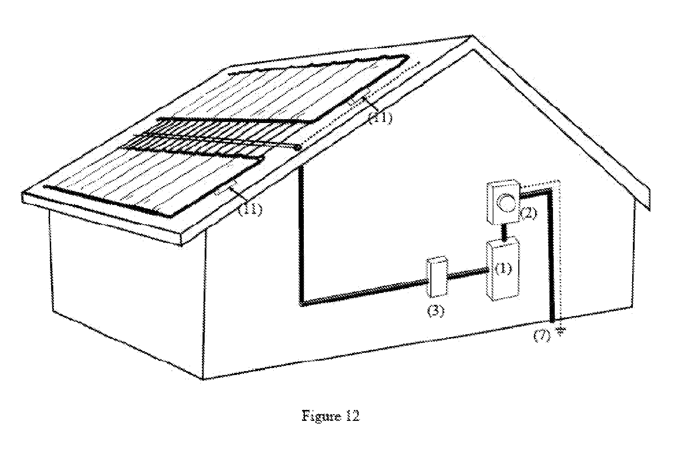

Figure 12 illustrates a conventional grid connection implementation that utilizes micro-inverters 11 instead of the inverter 4 according to the conventional implementations illustrated in Figures 10 and 11. In the conventional implementation illustrated in Figure 10, the micro-inverters 11 are distributed with the PV modules. There is one micro-inverter 11 for each PV panel. These separate micro-inverters 11 connect together through the AC outputs coming directly out of each PV module area, and the paralleled AC connections interface with the local loads and the electric utility feed 7 of the utility provider through the AC panel 1, employing industry-standard techniques similar to those described above with respect to Figures 10 and 11. Accordingly, although the local load and electrical utility grid connection of the implementation illustrated in Figure 12 is similar to those illustrated in Figures 10 and 11, the location and variety of employment of the micro-inverters 11 are different from the implementations illustrated in Figures 10 and 11. It has been proposed that utilizing the implementation of the micro-inverters 11 provides the advantage of being able to maximize the power point track (MPPT) of each PV module individually, based on factors such as specific shading and cleanliness. However, the micro-inverters 11 have additional drawbacks. First, the AC wiring lengths are longer, which can create higher system wiring losses, due to lower voltage transmission (120 VAC (AC volts) or 240 VAC) through such longer lengths of wire. Second, the micro-inverters 11, which are mounted underneath each PV module 8, can create or exacerbate maintenance problems because of their distributed, inaccessible locations, should their be any damage, failures, recalls or other maintenance requirements at the micro-inverter level. As shown in Figure 12, the PV modules are commonly mounted on roofs, which makes access to the micro-inverters 11 and PV modules 8 more difficult, and could also involve removal of the PV modules 8 to access the micro-inverters 11 mounted therebelow.

### (2) Interactions With Utility Providers With Conventional Implementations

Interactions with utility providers has been limited to two different approaches. The interactions described hereinbelow are applicable to the conventional implementations as illustrated in Figures 10-12. The most common approach is for the inverter 4 or micro-inverter 11 to function within industry-accepted standards, such as the IEEE 1547, the UL 1741, and the National Electric Code, as discussed above. Specifically, the inverter 4, 11 tracks the potential of the array of PV modules 8 for power generation, and then the inverter 4, 11 injects the power generated by the PV modules 8 into the utility grid of the utility provider. This variable ratio depends on on-site incident load levels and the production level of the distributed source. A prerequisite to this grid-interactive operation is for the inverter 4, 11 to monitor the conditions of the utility grid and disconnect if an abnormal voltage or frequency event occurs, among other safety precautions. In this case, the consumer having the DG system 8 is "credited" for the amount of power supplied to the utility grid, typically in proportion to the utility provider's rate that is charged for electricity consumption by the consumer, or the consumer's meter is turned back by an amount proportional to the power supplied into the utility grid. If the consumer consumes electricity from the utility grid, in excess of the power generated by the DG system 8 or in substitution for the power generated by the DG system 8, the consumer is charged a rate for electricity consumption. In this conventional grid-interactive operation system, the inverter 4, 11 operates independently from the consumer and utility provider, in that the inverter 4, 11 pushes excess power (i.e., power not required at the local site) generated by the DG system 8 into the utility grid, without any direct knowledge of the current electrical conditions of the utility grid, current rates offered by the utility provider, or the contemporaneous needs of the on-site loads or the utility grid (e.g., shed, produce, or power-factor correction).

A second approach has been proposed in U.S. Patent No. 7,274,975 to Miller. The Miller patent proposes a more complex interaction between a DG system and the utility grid. In particular, the DG system includes an associated distributed computer that performs predictive determinations of energy rates, weather forecast data and on-site demand (i.e., demand at the location in which the DG system is installed), and then attempts to match the on-site consumer's return through a supply-demand balance that determines when it is best to (a) sell on-site distributed production back to the utility provider, (b) store excess on-site distributed production in batteries for selling back to the utility at a future time in which the sell-back rate will be higher, (c) (re-)schedule loads for operating during lower rate times, and (d) charge batteries during a low rate time. The system of the Miller patent operates differently than conventional systems in which the inverter 4, 11 operates independently from the consumer and the utility provider, without any direct knowledge of electrical utility conditions, and is compatible with a variable electricity rate. However, the system of the Miller patent depends on having on-site energy storage and involves a custom, built-in distributed computer for determining on-site load allocation based on observed and speculative conditions of the utility grid and additional segregation of output loads.

### SUMMARY OF THE DISCLOSURE

An exemplary embodiment of the present disclosure provides a distributed generation power system. The distributed generation power system comprises a utility meter that is connectable to an electric utility provider, and configured to communicate with a communication device of the utility provider. The distributed generation power system also comprises an inverter configured to convert distributed generation power generated by a distributed generation power source into AC power. In addition, the distributed generation power system comprises an intermediate connector configured to connect the meter and inverter to constitute an integrated inverter-meter.

The integrated inverter-meter is configured to measure an aggregate amount of the distributed generation power generated by the distributed generation power source, and measure an aggregate amount of power consumed at a site at which the integrated inverter-meter is installed. In addition, the integrated inverter-meter is configured to communicate the measured aggregate amount of the distributed generation power and the measured aggregated amount of power consumed at the site to the communication device of the utility provider.

The inverter in the integrated inverter-meter is configured to receive at least one operating command from at least one of the meter, and the communication device of the utility provider via the meter. In addition, the integrated inverter-meter is configured to alter a control parameter of the operating state of the inverter in accordance with the received at least one operating command, and to alter an operating state of at least one of the distributed generation power source and at least one load connectable to the site, in accordance with a contractual relationship between the utility provider and an entity controlling the distributed generation power system, based on the received at least one operating command.

Another exemplary embodiment of the present disclosure provides a distributed generation power system. The exemplary distributed generation power system comprises a utility meter connectable to an electric utility provider, and configured to communicate with a communication device of the utility provider. In addition, the distributed generation power system comprises an inverter connected to the utility meter.

The inverter comprises a converter configured to convert distributed generation power generated by a distributed generation power source into AC power. The inverter also comprises a communication unit configured to communicate with the utility meter, and to receive at least one operating command from at least one of the meter and the communication device of the utility provider via the meter. In addition, the inverter comprises a control unit configured to alter a control parameter of an operating state of at least one of the inverter and the utility meter in accordance with the received at least one operating command.

### BRIEF DESCRIPTION OF THE DRAWINGS

Other objects and advantages of the present disclosure will become apparent to those skilled in the art upon reading the following detailed description of exemplary embodiments, in conjunction with the accompanying drawings, in which like reference numerals have been used to designate like elements, and in which:
Figure 1 is a diagram illustrating an exemplary integrated electric utility meter and inverter system according to at least one embodiment;
Figure 2 is an exploded view of an example of the integrated inverter-meter illustrated in Figure 1;
Figure 3 illustrates an exemplary configuration of an intermediate AC-meter connector according to at least one embodiment;
Figure 4 is a block diagram illustrating exemplary components of an inverter according to at least one embodiment;
Figure 5 is an exploded view of another exemplary integrated inverter-meter according to at least one embodiment;
Figure 6 is a diagram illustrating another exemplary embodiment of an integrated inverter-meter;
Figure 7 is an exploded view of an example of the integrated inverter-meter illustrated in Figure 6;
Figure 8 is a diagram illustrating another exemplary embodiment of an integrated inverter-meter;
Figure 9 is a diagram illustrating another exemplary embodiment of an integrated inverter-meter;
Figure 10 illustrates a conventional standard grid implementation;
Figure 11 illustrates a conventional line side tap grid connection implementation; and
Figure 12 illustrates a conventional micro-inverter grid connection implementation.

### DETAILED DESCRIPTION OF EXEMPLARY EMBODIMENTS

Exemplary embodiments of the present disclosure as described herein have been developed to make emission-free energy production a more viable, sustainable and economically competitive alternative to conventional electricity production and distribution systems and to provide dynamic interaction with utility providers.

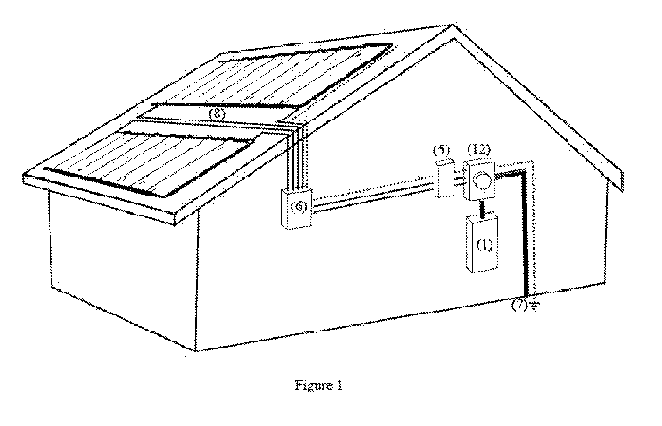

Figure 1 is a diagram illustrating an exemplary integrated electric utility meter and inverter system according to at least one embodiment. Elements of the exemplary system illustrated in Figure 1 that have the same reference numeral as the elements illustrated in Figures 10-12 have functions similar to the elements illustrated in Figures 10-12 and will not be described further, unless otherwise noted.

Reference numeral 12 denotes a smart, highly integrated electric utility meter and inverter. The term "integrated electric utility meter and inverter" will hereinafter be abbreviated as "integrated inverter-meter," unless otherwise noted. A DC disconnect 5 is commonly required by appropriate administrative codes, and is sometimes required to be in a separate housing. Figure 1 illustrates that the DC disconnect 5 is separated from the integrated inverter-meter 12. Alternatively, the DC disconnect 5 can be incorporated with the integrated inverter-meter 12, either within the housing (packaging) of the integrated inverter-meter 12 or affixed to the housing of the integrated inverter-meter 12.

The integrated inverter-meter 12 includes a distributed generation (DG) inverter integrated with an electric utility meter. The meter integrated with the inverter may be a so-called net meter to measure bi-directional electricity flow. The meter integrated with the inverter may also be a so-called "smart" meter. A smart meter, as discussed by the Electrical Power Research Institute, the Department of Energy and the California Energy Commission, is a component in a smart electric distribution system that has three key components: (1) high performance, low latency communication back to a communication device of the utility provider (either over the utility grid or independent of the utility grid) to exchange real-time monitor and control data; (2) sensing capabilities of providing real-time information about current states of the operations and conditions of the utility grid; and (3) high performance control capabilities of receiving actionable information from utility enterprise systems, such as a utility provider. The term "actionable" is used herein to mean that an action is undertaken within a predetermined period of time upon receipt of the information. The term "meter," as used herein, is therefore intended to encompass a net meter, a smart meter, or any combination thereof.

According to an exemplary embodiment, the DG inverter is integrated with the meter in one housing. For example, the integrated inverter-meter 12 is illustrated in Figure 1 as one unitary housing. The inverter is tightly integrated with the electric utility feed 7 so that it is closely coupled with the meter. The tight integration results in a unitary, retrofit enclosure that achieves functional interaction between the inverter and meter. The size and shape of the enclosure can vary to accommodate installations of different sized inverters and meters.

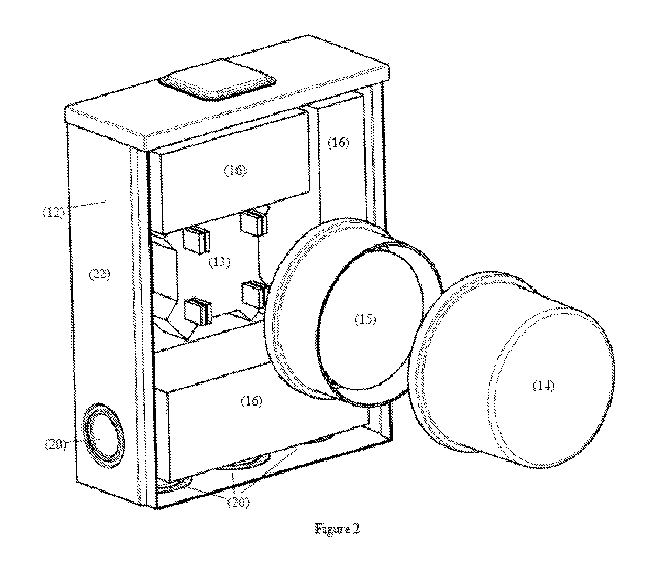

Figure 2 is an exploded perspective view of an example of the integrated inverter-meter illustrated in Figure 1. As illustrated in Figure 2, the integrated inverter-meter 12 comprises an enclosure 22 for housing the integrated inverter-meter 12. The integrated inverter-meter 12 comprises AC (and/or DC) cabling interconnects 13, a meter 14, an intermediate AC-meter connector 15, and components of the inverter 16 installed within the enclosure 22.

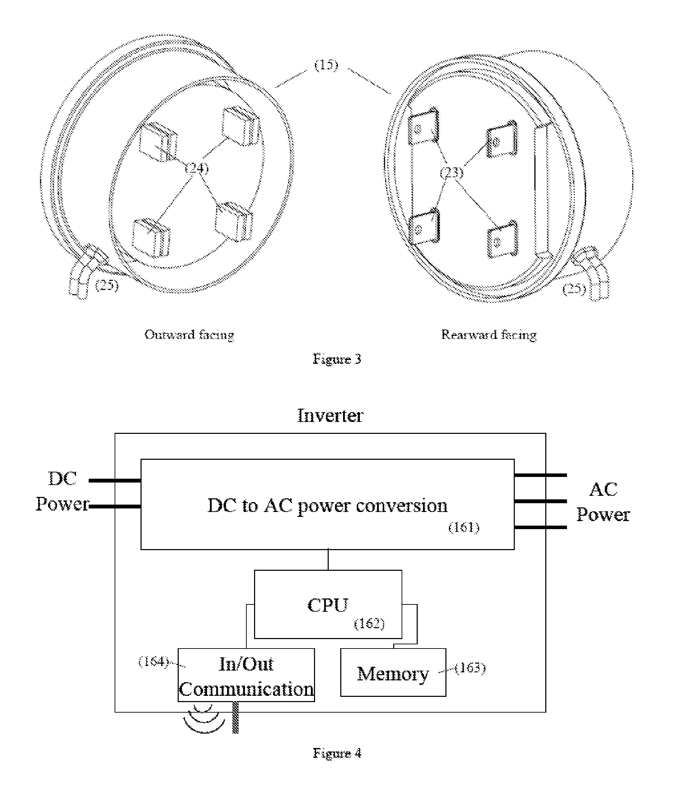

According to an exemplary embodiment, the intermediate AC-meter connector 15 is a plug-and-play connection medium for connecting the AC cabling interconnects 13, the meter 14 and the inverter 16. For example, Figure 3 illustrates an exemplary configuration of an intermediate AC-meter connector 15 according to at least one embodiment. Reference numeral 23 in Figure 3 denotes tabs that plug into terminals of the AC cabling 13 interconnects, and reference numeral 24 denotes connection receptacles that receive tabs from the meter 14. Four tabs 23 and four receptacles 24 are illustrated in Figure 3 as a representative example. It is to be understood that the number of tabs 23 and receptacles 24 is not limited to four, and any number of tabs 23 and receptacles 24 may be provided depending on the particular factors involved in interconnecting the AC cabling 13 and meter 14 with the intermediate AC-meter connector 15. Reference numeral 25 in Figure 3 denotes wiring from the intermediate AC-meter connector 15 to the inverter 16. The wiring may, for example, constitute AC wiring, and may also include wiring for communication between the intermediate AC-meter connector 15 and the inverter 16. It is to be understood that the number of wires 25 is not to be limited to two, as illustrated in the example of Figure 3, and may be any number of wires to achieve the functions for a particular installation and interconnection between the intermediate AC-meter connector 15 and the inverter 16.

The intermediate AC-meter connector 15 is configured to route the AC input (source) and output (load) wiring (e.g., terminals) from the AC cabling interconnects 13 to the meter 14. In addition, the intermediate AC-meter connector 15 is configured to route the AC power terminals from the inverter 16 to any of the following: (i) the AC input (source) terminal(s) of the AC cabling interconnects 13, (ii) the AC output (load) terminal(s) of the AC cabling interconnects 13, and/or (iii) the meter terminals before (i) or (ii). According to this configuration, the inverter 16 can be connected to the meter 14 independent of whether at least one power terminal of the meter 14 is connected to the utility provider to receive AC source power from the utility grid. The reception of AC power from the utility provider can be interrupted for a variety of reasons. For example, there could be an outage on the lines of the utility provider, an enterprise communication device of the utility provider could send an operation command to the meter 14, or an operator of the integrated inverter-meter 12 (e.g., a resident of the site at which the integrated inverter-meter 12 is installed, or a utility worker) could disconnect (i.e., shed) from receiving the AC source power from the utility provider. According to the configuration of the intermediate AC-meter connector 15, a connection between the inverter 16 and the meter 14 is maintained, independent of whether at least one power terminal of the meter 14 is connected to the utility provider. Therefore, the integrated inverter-meter 12 can continue to inject a predetermined amount of the DG power generated by the DG system 8 into the utility grid, even if a power terminal of the meter 14 for receiving AC source power from the utility provider is disconnected.

The configuration of the intermediate AC-meter connector 15 provides a significant advantage over conventional DG power systems. In particular, conventional smart meters can disconnect a load (e.g., during peak rates), but disconnecting the meter from the utility provider would prevent DG power from being injected into the utility grid. On the other hand, the integrated inverter-meter 12, in concert with the intermediate AC-meter connector 15, is configured to continue to be able to inject DG power into the utility grid, even if a power terminal of the meter 14 for receiving AC source power from the utility provider is disconnected.

Figure 4 is a block diagram illustrating exemplary components of the inverter 16 according to at least one embodiment. As shown in Figure 4, the inverter 16 includes an D/A (digital to analog) converter 161 for converting DC power generated by the DG system 8, and possibly combined by the combiner 6. The inverter 16 includes a control unit 162, such as a CPU, for example, a memory unit 163, and a communication unit 164. The control unit 162 controls the aggregate functions of each component of the inverter 16 as well as the interrelationship and interaction between the components of the inverter 16 with the other components of the integrated inverter-meter 12. The control unit 162 includes a processor for controlling the operations of the inverter 16.

The memory unit 163 may include, for example, a ROM, RAM, hard drive (as one type of permanent storage memory), and may include a slot for receiving removable storage media therein, such as optical media, flash memory, etc. The ROM stores computer-readable programs, such as an operating system (OS) and computer-readable application programs, and logic instructions which are implemented by the control unit 162. The RAM is used as a working memory by the control unit 162 when executing the computer-readable programs and logic instructions stored in the ROM, permanent storage memory and/or removable storage media.

The communication unit 164 of the DG inverter 16 is configured to communicate with the meter 14 and intermediate AC-meter connector 15, via a wired or wireless protocol. Examples of wired protocols include, but are not limited to, serial wiring (RS232), parallel wiring, CAN (Controller Area Network), Modbus, analog communication lines, etc. Examples of wireless protocols include, but are not limited to, IEEE 802.11, Wi-fi, Zigbee, Bluetooth, infrared, cellular (e.g., GSM, CDMA, W-CDMA), etc. The communication unit 164 carries out communication processing among the components of the inverter 16 and the components of the integrated inverter-meter 12 under the control of the control unit 162. The communication unit 164 is also configured to connect to external networks, such as the Internet, a LAN (local area network), or a VPN (virtual private network) via any conceivable wired or wireless connection medium or protocl. For example, the communication unit 164 can connect to the Internet via a dial-up or broadband connection to receive operating commands from a remote computer or server or from the enterprise communication device of the utility provider. Alternatively, the communication unit 164 can connect to an external network or external communication device, such as a remote computer or server, the enterprise communication device of the utility provider, etc., via the utility power lines of the utility provider.

With reference to Figure 2, the enclosure 22 includes one or more openings 20, such as a knockout, for example, for the insertion of cabling customary in a local electrical power installation design. In the example of Figure 2, a sealed DC "plug" or conduit can be inserted through at least one opening 20 to the integrated inverter-meter 12 to the PV modules 8.

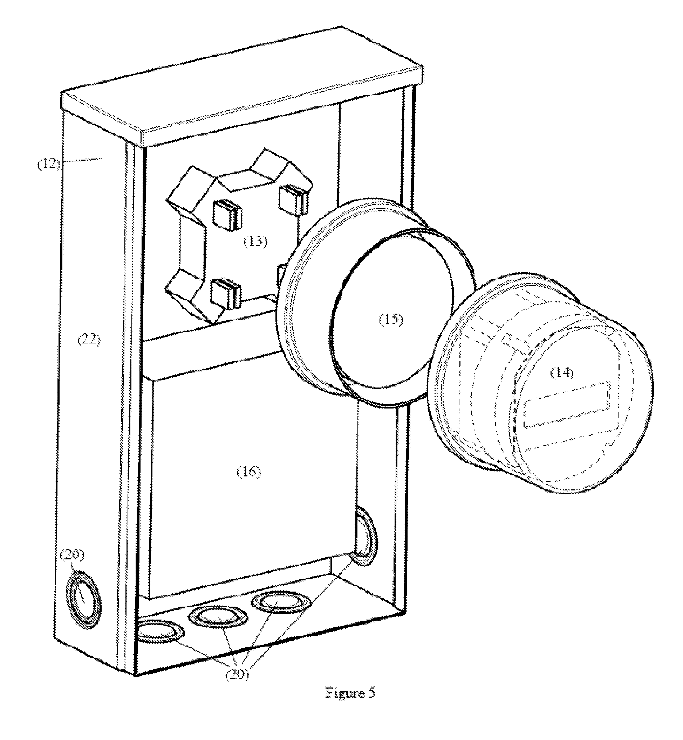

Figure 5 is an exploded perspective view of another exemplary embodiment of an integrated inverter-meter 12 as illustrated in Figure 1. As illustrated in Figure 5, the enclosure 22 is enlarged so as to accommodate a monolithic DG inverter 16 and provide greater room for interconnecting the PV modules 8 with the integrated inverter-meter 12 via DC cabling, and for interconnecting the AC panel 1 with the integrated inverter-meter 12 via AC cabling.

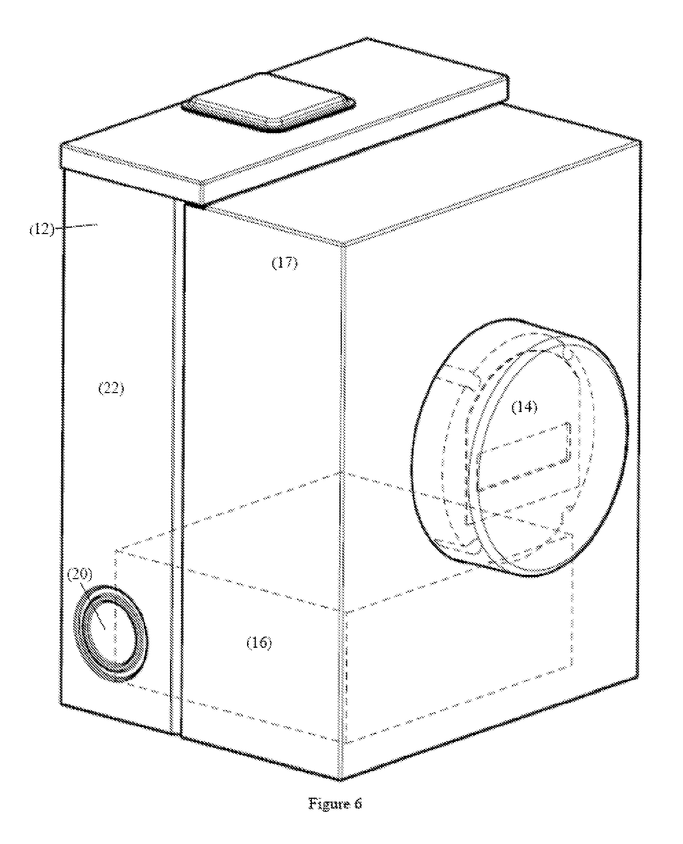

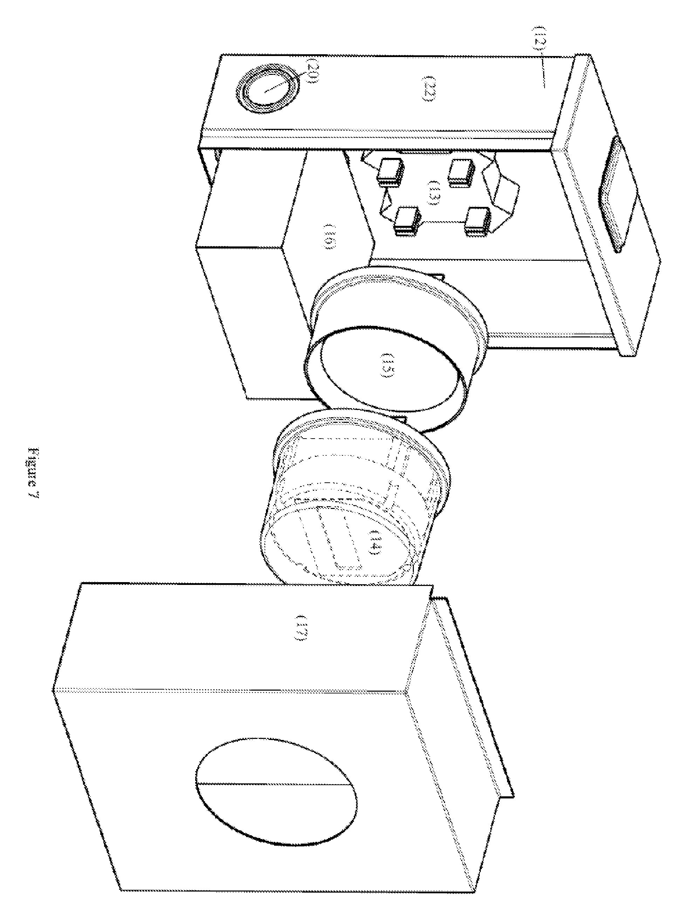

Figure 6 is a diagram illustrating another exemplary embodiment of an integrated inverter-meter 12 as illustrated in Figure 1. Figure 7 is an exploded perspective view illustrating the installation of the example of the integrated inverter-meter 12 shown in Figure 6. The exemplary embodiment of Figures 6 and 7 is similar to the exemplary embodiment shown in Figures 2 and 5, except that a modified lid 17 is provided for an additional housing area for the inverter 16.

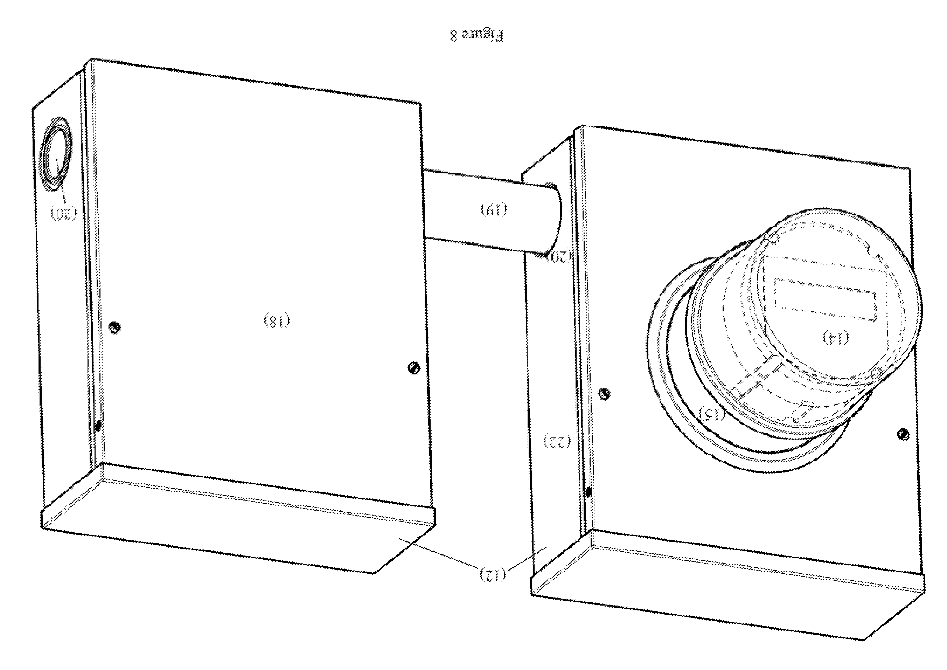

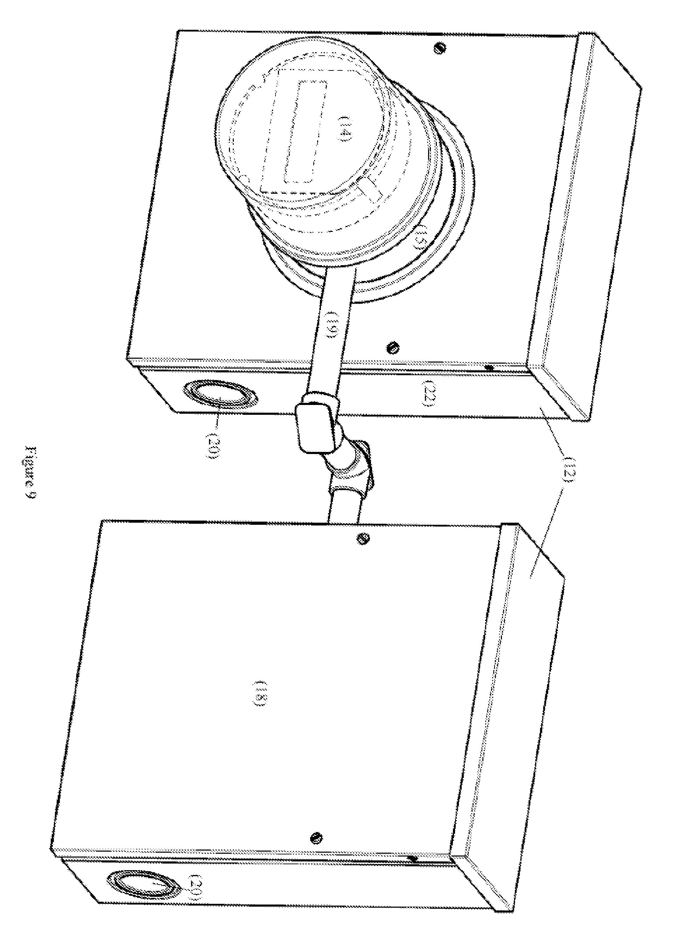

Figures 8 and 9 illustrate another exemplary embodiment of an integrated inverter-meter 12 as illustrated in Figure 1. The exemplary embodiments of Figures 8 and 9 include the installation of a separate enclosure 18 for housing, in whole or in part, the inverter 16, conduit and/or appropriate cabling 19 (AC or DC as needed) to the opening 20 of the enclosure 12 (see Figure 8) or to the intermediate AC-meter connector 15 (see Figure 9).

According to an exemplary embodiment, a distributed generation power system includes the meter 14 connectable to an electric utility provider, and configured to communication with a communication device (e.g., enterprise communication device) of the utility provider. The exemplary system also includes the inverter 16 configured to convert distributed generation power generated by a DG power source 8 into AC power. The exemplary system also includes an intermediate AC-meter connector 15 configured to connect the meter 14 and inverter 16 to constitute an integrated inverter-meter 12.

The integrated inverter-meter 12 is configured to measure an aggregate amount of the DG power generated by the DG power source 8, and measure an aggregate amount of power consumed at a site at which the integrated inverter-meter 12 is installed. In addition, the integrated inverter-meter 12 is configured to communicate the measured aggregate amount of the DG power and the measured aggregated amount of power consumed at the site to the communication device of the utility provider. The integrated inverter-meter 12 can be configured to determine a difference between the measured aggregate amount of the DG power and the measured aggregate amount of the power consumed at the site, and communicate the determined difference to the communication device of the utility provider, to thereby alert the utility provider of an amount of DG power that can be injected into the utility grid, or to alert the utility provider of the amount of AC source power that may be required to be received from the utility grid.

The inverter 16 in the integrated inverter-meter 12 is configured to receive one or more operating commands from the meter 14 and/or the communication device of the utility provider via the meter 14. In addition, the integrated inverter-meter 12 is configured to alter a control parameter of the operating state of the inverter 16 in accordance with the received operating command(s), and to alter an operating state of (i) the DG power source 8, and (ii) one or more loads connectable to the site, in accordance with a contractual relationship between the utility provider and an entity controlling the exemplary, based on the received operating command(s). An example of an operating command received by the integrated inverter-meter 12 would be a command to connect or disconnect the DG power source 8 from the utility grid for safety precautions, reliability, and/or anti-islanding.

The inverter 16 can be configured to correct a power factor of a load connected to the site, based on a communicated measurement of the power factor from the meter 14 and/or the communication device of the utility provider via the meter 14.

The DG power source 8 can be installed at the site at which the integrated inverter-meter 12 is installed, as illustrated in Figure 1, for example. Alternatively, the DG power source 8 can be installed at a facility external to the site at which the integrated inverter-meter 12 is installed. For example, the integrated inverter-meter 12 can be installed at an individual's house or place of business, while the DG power source 8 can be installed on a building or facility external to the individual's house or place of business.

The meter 14 in the integrated inverter-meter 12 can be configured to disconnect at least one load at the site at which the integrated inverter-meter 12 is installed, and to maintain a connection with the utility provider for injection of a predetermined amount of the DG power generated by the DG system 8 into the utility grid, independent of whether at least one power terminal (e.g. main load metered terminal) of the meter 14 is connected to the utility provider to receive AC source power from the utility grid. In addition, the inverter 16 can be configured to supply auxiliary power to at least one auxiliary load through an auxiliary contact between the integrated inverter inverter-meter 12 and the auxiliary load, when the integrated inverter-meter 12 disconnects a load at the site at which the integrated inverter-meter 12 is installed.

The integrated inverter-meter 12 can be configured to disconnect from the utility grid upon determining that the injection of the DG power into the utility grid would be unsafe. For example, the integrated inverter-meter 12 can be configured to determine that the injection of the DG power into the utility grid would be unsafe when the integrated inverter-meter 12 receives a communication of unsafe conditions from the communication device of the utility provider, the integrated inverter-meter 12 is unable to establish a communication with the communication device of the utility provider, and/or the integrated inverter-meter 12 detects that AC source power is no longer being supplied from the utility provider.

The integrated inverter-meter 12 can be configured to control automation of the DG power source 8, at least one connection of AC source power from the utility provider, and at least one local load in accordance with a respective communication protocol between the integrated inverter-meter 12 and (i) the DG power source 8, (ii) the communication device of the utility provider, and (iii) the load, for example.

With reference to Figure 4, for example, the integrated inverter-meter 12 includes a communication interface 164 connected to an external network to receive an automation command for controlling the automation of the DG power source 8, the connection of AC source power from the utility provider, and/or one or more loads. For example, the communication unit 164 can connect to the Internet via a dial-up or broadband connection to receive operating commands from a remote computer or server or from the enterprise communication device of the utility provider. Alternatively, the communication unit 164 can connect to an external network or external communication device, such as a remote computer or server, the enterprise communication device of the utility provider, etc., via the utility power lines of the utility provider.

The communication unit 164 of the inverter 16 can also function in concert with a user interface to receive an automation command from a user for controlling the automation of the DG power source 8, the connection of AC source power from the utility provider, and one or more loads, for example. The user interface can include keys and pointing devices that are manipulated by the user. For example, the user interface can include a QWERTY keyboard, a trackball, a stylus or similar selecting and pointing device, a number pad, push buttons, a thermostat, etc. The user interface can also include a multi-input touch screen with a virtual keyboard and buttons represented in a graphical user interface. The user interface can be installed as a hardware device external to or integral with the integrated inverter-meter 12 and communicatively connected to the integrated inverter-meter 12.

The above-described automation can include on/off programming of the DG power system 8, the connection of AC source power from the utility provider, and/or one or more loads.

One or more loads can be a plug-in vehicle that is configured to (i) be powered by the DG power and powered by the AC source power from the utility provider, and/or (ii) store power distributed thereto for later consumption. The above-described communication interface of the integrated inverter-meter 12 can connect to an external network to receive an automation command for controlling automation of the plug-in vehicle. For example, a resident can control the automation of the plug-in vehicle from a remote site via a communication network such as the Internet, for example. The plug-in vehicle can be, for example, a battery, an electrochemical double layer capacitor, a flywheel, a fuel cell, and/or an engine driving a generator.

The integrated inverter-meter 12 according to the above-described exemplary embodiments commonly provide numerous advantageous aspects for the implementation of distributed generation power in concert with conventional power distribution systems. For example, the integrated inverter-meter 12 functionally surpasses the separate functions of the meter (e.g., net meter and/or smart meter) and DG inverter by enabling intelligent interaction between the two units through a communication protocol and control interface, through which control and measurement of DG power can be achieved.

The improved control and measurement of distributed power is achieved, in part, through the integration of and intelligent interaction between the inverter 16 and the meter 14. Such integration enables improved interactions between the inverter 16 and meter 14, and between the integrated inverter-meter 12 through bi-directional communications. According to an exemplary embodiment, the inverter 16 and meter 14 are each configured to have a dedicated protocol for communicating therebetween.

The bi-directional communication between the integrated inverter-meter 12 and the utility provider, which is facilitated by the integration of the meter 14 and the inverter 16 according to the exemplary embodiments as described above, enables functions that are nearly limitless with the availability of bi-directional information and the ability of the integrated inverter-meter 12 to connect sources and disconnect loads (i.e., load automation). As discussed above, in conventional utility interactions, the inverter operates independently, without any direct knowledge of electrical utility conditions or needs (such as shed, produce, or power-factor correction). Likewise, the utility provider operates without any knowledge of the operation of distributed energy sources.

The integrated inverter-meter 12, through bi-directional communication with the utility provider, together with the communication protocol and communication interface between the meter 14 and inverter 16, provides operational metrics, availability and operational control parameters to the utility provider, while the utility provider can provide transmission conditions, rates, and system needs back to integrated inverter-meter 12.

This is achieved, in part, because of the integration of the meter 14 and inverter 16. The integration of the inverter-meter 12 operatively provides (1) DG power interaction with the meter 14, and (2) inverter 16 communication with the meter 14. The power interaction between the meter 14 and the inverter 16 provides key energy management functionality between the two integrated components, which provides the utility provider with additional information about the on-site DG generation, total electricity production consumed, and the net electricity consumed.

Furthermore, the DG power generation entry point being co-located by the meter 14 can allow additional functionality not available in conventional implementations. For example, the integrated inverter-meter 12 enables the connection of the DG generation power leads directly to the utility provider load source of the meter 14, before the meter 14 measures the production level. This enables a capability of reducing and/or disconnecting site loads and maintaining DG production to the utility grid, which allows for the potential of consumer (end-user) reimbursement rate structure(s) for load-levelizing or so-called shedding, thereby improving real-time economic realization for DG energy producers. Furthermore, because the AC-meter connector 15 connects DG power routing through the meter 14 of the integrated inverter-meter 12, the meter 14 can supervise and/or control connection or disconnection of the DG power to/from the utility grid. This functionality, when combined with appropriate functional intelligence and network control, provides the capability of new utility enterprises or even participatory network solution level capabilities, including anti-islanding, or other protective- or safety-related disconnection capabilities, and dispatchable energy connection commands.

Another functionality achieved from the integrated inverter-meter 12 is the addition of "smart" communication between the inverter 16 and the meter 14, and between the inverter 16 and the utility provider via the meter 14. The communications between the integrated inverter-meter 12 and a communication device of the utility provider can be through wired or wireless communication mediums.

Accordingly, the exemplary embodiments of the integrated inverter-meter 12 disclosed herein provide numerous advantageous aspects. For example, the integrated inverter-meter 12 is configured to measure DG source power and energy to determine a break-out between local DG generation versus local consumption (i.e., at the location where the integrated inverter-meter 12 is installed), and provide communication of the DG generation and location consumption, in addition to smart meter readings (such as net consumption, power factor, etc.) back to the utility provider. Moreover, the inverter 16 of the integrated inverter-meter 12 can receive centralized commands from either the utility provider via the communication functions of the meter 14, or via the meter 14 directly. These commands can alter the operating state of the local loads and/or sources and inverter.

Furthermore, the integrated inverter-meter 12 can provide a change in operating state between the consumer and the utility provider in a continuous and mutually beneficial arrangement.

In addition to the advantageous aspects described above, the exemplary integrated inverter-meter 12 disclosed herein can also provide a mutually beneficial economic arrangement for both the utility provider and a consumer of the utility provider having a DG power system installed at a residential or commercial site. For instance, consumers are regularly charged a first rate (e.g., $0.10 per kwh (kilowatt hour)) for consuming AC source power from the utility provider. Under conventional implementations, a consumer is typically credited a second rate, which is usually approximate or equal to the first rate, for injecting DG power into the utility grid. For example, if the consumer is charged $0.10 per kwh for consuming AC source power, the consumer can be credited the same amount for injecting DG source power into the utility grid. According to the above-described exemplary embodiments, the consumer can be credited a third rate, which is greater than the first and second rates, when the consumer (i) at least partially disconnects (i.e., sheds) from receiving AC source power from the utility provider and/or (ii) injects DG power into the utility grid during a time in which the utility provider's cost is a fourth rate, which is greater than the first, second and third rates, for obtaining additional power to be supplied to the customers of the utility provider.

For example, if the utility provider's cost for producing power is $0.01 per kwh under normal load conditions, the utility provider may have to incur an increased cost to obtain additional power to be supplied to its customers during periods of increased demand. For instance, under normal load conditions, the utility provider may have to generate power by using additional power plants that are not used during normal load conditions, or the utility provider may have to purchase additional power from another utility provider at a rate of, for example, $0.60 per kwh. According to the above-described exemplary embodiments, a consumer of the utility provider can be compensated at a rate that exceeds the normal consumption rate (e.g., $0.40 per kwh versus $0.10 at the normal consumption/credit rate) when the utility provider has to obtain additional power to supply to its consumers. For example, if the consumer is charged $0.10 per kwh for consuming AC power from the utility grid under normal load conditions, and is credited $0.10 per kwh to the utility grid, the consumer could be credited $0.30 per kwh when the utility provider's cost for obtaining additional power is greater than these rates, e.g., $0.60 per kwh. This mutually beneficial arrangement provides an economic incentive for utility consumers to install DG systems, and also provides an economic incentive for utility providers to support the expansion of DG systems.

This mutually beneficial arrangement is also advantageous in the instances when a power terminal of the meter 14 is disconnected from receiving AC source power from the utility provider. As discussed above, in conventional DG systems, when the power terminal of the meter is disconnected from the utility provider, the disconnection also prevents DG power from being injected into the utility grid. On the other hand, according to the exemplary integrated inverter-meter 12 of the present disclosure, the integrated inverter-meter 12 is configured to continue being able to inject DG source power into the utility grid, independent of whether a power terminal of the meter 14 is connected to the utility provider to receive AC source power from the utility grid.

In the aforementioned examples of the integrated inverter-meter 12, the integrated inverter-meter 12 was described as being an integrated device contained within one enclosure 22 (e.g., Figures 2 and 5-7), or an integrated device in which the meter 14 and intermediate AC-meter connector 15 are contained in one enclosure 22, while the inverter 16 is contained at least partially in an enclosure 18 connected directly to the enclosure (e.g., Figures 8 and 9). The advantageous aspects of the above-described exemplary embodiments can also be obtained by using the above-described inverter 16 in concert with the architectures of the conventional implementations as illustrated in Figures 10-12, for example. In this case, the meter 2 and inverter 16 are connected in series via an AC mains panel 1 that includes breakers, similar to the conventional implementations illustrated in Figures 10-12. In addition to the conventional implementations, the exemplary embodiments of the integrated inverter-meter 12 as described above are utilized in establishing a dedicated protocol for bi-directional communication between the inverter 16 and meter 2, and the installation of the intermediate AC-meter connector 15 either where the meter 2 is installed or the inverter 16 is installed.

The AC-meter connector 15 is a plug-and-play connector that routes (a) the AC input (source) and output (load) wiring from the meter box (e.g., the AC cabling interconnects 13) to the meter 14, and (b) the AC power terminals from the inverter 16 to any one of the following: (i) the meter box AC input (source) terminals, (ii) the meter AC output (load) terminals, and/or (iii) the meter before (i) or (ii). According to the configuration of the intermediate AC-meter connector 15, a connection between the inverter 16 and the meter 14 is maintained, independent of whether at least one power terminal of the meter 14 is connected to the utility provider. Therefore, the integrated inverter-meter 12 can continue to inject a predetermined amount of the distributed generation power generated by the DG system 8, even if a power terminal of the meter for receiving AC source power from the utility provider is disconnected from the utility grid.

An exemplary embodiment of the present disclosure provides a distributed generation power system that includes the meter 14 connectable to the utility provider and configured to communicate with a communication device of the utility provider. The exemplary system also includes the inverter 16 connected to the meter 14. With reference to Figure 4, for example, the inverter 16 includes a converter 161 configured to convert the DG power generated by the DG power system 8 into AC power. The inverter 16 also includes a communication unit 164 configured to communicate with the meter, and to receive at least one operating command from the meter 14 and/or the communication device of the utility provider via the meter 14. In addition, the inverter 16 includes a control unit 162 configured to alter a control parameter of an operating state of the inverter 16 and/or the meter 14 in accordance with the received operating command.

The exemplary system can also includes the intermediate AC-meter connector 15 configured to connect the meter 14 and the inverter 16 to constitute an integrated inverter-meter 12. The inverter 16 is connected to cabling terminals (AC and/or DC) including at least one source terminal for receiving the DG power and/or the AC source power from the utility provider, and a load terminal for supplying the DG source power and/or AC source power to a load at a site at which the inverter 16 and/or meter 14 are installed. The load terminal of the AC cabling can also supply the DG source power to the utility provider. The AC-meter connector 15 is configured to route at least one power terminal of the inverter to at least one of (i) the source terminal of the cabling terminals, (ii) the load terminal of the cabling terminals, and (ii) at least one power terminal of the meter 14.

According to the above-described exemplary system, the meter 14 is configured to disconnect at least one load at the site, and to maintain a connection with the utility provider for injection of a predetermined amount of the DG power into the utility grid, independent of whether the power terminal of the meter 14 is connected to the utility provider to receive AC source power from the utility grid.

According to one exemplary embodiment, the integrated inverter-meter can be contained in a single enclosure 22 (see, e.g., Figures 2 and 5-7). According to another exemplary embodiment, the meter 14 and intermediate AC meter-connector 15 are contained in a first enclosure 22, and the inverter 16 is at least partially contained in a second enclosure 18 separated from the first enclosure 22. As shown in Figure 8, the first enclosure 22 and second enclosure 18 are connected to each other by AC and/or DC cabling 19. As shown in Figure 9, the inverter 16 contained in the second enclosure 18 is connected to the intermediate AC-meter connector 15 contained in the first enclosure 22 by AC and/or DC cabling 19.

According to the above-described exemplary embodiments, the control unit 162 of the inverter 16 and the meter 14, through bi-directional communication, are configured to actively connect and disconnect the power terminal of the inverter 16 via a power switching mechanism. In addition, the intermediate AC-meter connector 15 is configured to route communication wiring from the inverter 16 to the meter 14. Furthermore, the inverter 16 and meter 14, through bi-directional communication, are configured to actively connect and disconnect the source and load terminals of the cabling terminals.

Combinations of the above-described exemplary embodiments, and other embodiments not specifically described herein will be apparent to those skilled in the art upon reviewing the above description. The scope of the various exemplary embodiments includes various other applications in which the above systems and structures are used. For example, the above-described exemplary embodiments were described with PV modules being utilized to generate distributed generation power. It is to be understood that other renewable energy sources can be used in conjunction with such PV modules, or in substitution for such PV modules for the production of DC power and subsequent injection of AC power into a utility grid.

In addition, the exemplary integrated inverter-meter 12 was described above as having one inverter 16 and one meter 14. The numbers of inverters 16 and meters 14 can be different from one for various installations. For example, in the case of a residential or commercial building with distinct units each having a meter installed therefor, such as an apartment or condominium building, an office, or a shopping center, a single inverter 16 can be integrated with multiple meters 14. Similarly, multiple inverters 16 can be integrated with one meter 14 at a facility requiring a large load of power, such as an industrial facility, for example. It is to be understood that the exemplary embodiments disclosed above encompass any number of inverters 16 that can be integrated with any number of meters 14 to constitute one or more integrated inverter-meters 12.

It will be appreciated by those skilled in the art that the exemplary embodiments of the present disclosure can be embodied in other specific forms without departing from the spirit or essential character thereof. The presently disclosed embodiments are considered in all respects to be illustrative and not restrictive. The scope of the invention is indicated by the appended claims rather than the foregoing description, and all changes that come within the meaning and range of equivalents thereof are indicated to be embraced therein.

## Claims

1. A distributed generation power system comprising:
a utility meter connectable to an electric utility provider, and configured to communicate with a communication device of the utility provider;
an inverter configured to convert distributed generation power generated by a distributed generation power source into AC power; and
a connection mechanism configured to connect the meter and inverter to constitute an integrated inverter and meter, wherein:
the inverter in the integrated inverter and meter is configured to receive at least one operating command from at least one of the meter, and the communication device of the utility provider; and
the integrated inverter and meter are configured to alter a control parameter of the operating state of at least one of the inverter and the meter in accordance with the received at least one operating command.

2. The distributed generation power system of claim 1, wherein the integrated inverter and meter are configured to:
measure an aggregate amount of the distributed generation power generated by the distributed generation power source, and measure an aggregate amount of power consumed at a site at which the integrated inverter and meter are installed;
communicate at least one of the measured aggregate amount of the distributed generation power and the measured aggregated amount of power consumed at the site to the communication device of the utility provider; and
alter an operating state of at least one of the distributed generation power source and at least one load connectable to the site, in accordance with a contractual relationship between the utility provider and an entity controlling the distributed generation power system, based on the received at least one operating command.

3. The distributed generation power system of claim 1 or claim 2,
wherein the inverter is configured to correct a power factor of at least one load connectable to a site at which the integrated inverter and meter are installed, based on a communicated measurement of the power factor from at least one of the meter and the communication device of the utility provider.

4. The distributed generation power system of claim 1 or claim 2,
wherein the distributed generation power source is one of installed at a site at which the integrated inverter and meter are installed, and installed at a facility external to the site at which the integrated inverter and meter are installed.

5. The distributed generation power system of claim 1 or claim 2,
wherein the integrated inverter and meter are configured to disconnect from the utility grid upon determining that injection of the distributed generation power into the utility grid would be unsafe,
the integrated inverter and meter being optionally configured to determine that injection of the distributed generation power into the utility grid would be unsafe when at least one of the integrated inverter and meter receives a communication of unsafe conditions from the communication device of the utility provider, and the integrated inverter and meter are unable to establish communication with the communication device of the utility provider.

6. The distributed generation power system of claim 1 or claim 2,
wherein the integrated inverter and meter are configured to control automation of at least one of the distributed generation power source, at least one connection of AC source power from the utility grid, and at least one load connectable to the site at which integrated inverter and meter are installed, in accordance with a communication protocol between the integrated inverter and meter and the distributed generation power source, the communication device of the utility grid, and the at least one load, respectively,
wherein the automation optionally includes programming between on and off of at least one of the distributed generation power source, the at least one connection of AC source power from the utility grid, and the at least one load.

7. The distributed generation power system of claim 6, wherein the integrated inverter and meter comprises a communication interface configured to connect to an external network to receive an automation command for controlling the automation of at least one of the distributed generation power source, the at least one connection of AC source power from the utility grid, and the at least one load, wherein the external network is, for example, the Internet.

8. The distributed generation power system of claim 6, wherein the integrated inverter and meter comprises a user interface configured to receive an automation command from a user for controlling the automation of at least one of the distributed generation power source, the at least one connection of AC source power from the utility grid, and the at least one load.

9. The distributed generation power system of claim 2 or claim 3,
wherein:
the at least one load is a plug-in vehicle being configured to at least one of (i) be powered by the distributed generation power and powered by AC source power from the utility grid, and (ii) store power distributed thereto for later consumption; and
the integrated inverter and meter comprises a communication interface configured to connect to an external network to receive an automation command for controlling automation of the plug-in vehicle,
optionally the plug-in vehicle is at least one of a battery, an electrochemical double layer capacitor, a flywheel, a fuel cell, and an engine driving a generator.

10. The distributed generation power system of claim 1, claim 2 or claim 5, wherein the operating command instructs the inverter in the integrated inverter and meter to connect or disconnect from the utility grid for at least one of safety precautions, reliability, and anti-islanding.

11. The distributed generation power system of claim 2, wherein the contractual relationship between the utility provider and the entity includes:
the entity being charged a first rate for consumption of AC source power received at the integrated inverter and meter from the utility grid;
the entity being credited a second rate approximate or equal to the first rate for injection of the distributed generation power into the utility grid;
the entity being credited a third rate, which is greater than the first and second rates, when the entity at least partially disconnects from receiving the AC source power from the utility provider during a time in which a cost to the utility provider is a fourth rate, which is greater than the first, second and third rates, for obtaining additional AC source power to be supplied to the utility network.

12. The distributed generation power system of claim 2, wherein the integrated inverter and meter are configured to communicate to the communication device of the utility provider at least one of (i) the measured aggregate amount of the distributed generation power, (ii) the measured aggregate amount of the power consumed at the site, (iil) a difference between the measured aggregate amount of the distributed generation power and the measured aggregate amount of the power consumed at the site, (iv) a time at which the measured amount of the distributed generation power exceeds AC power to be consumed at the site at which the integrated inverter and meter are installed, (v) an amount of the distributed generation power injectable into the utility network, (vi) an amount of AC source power to be supplied from the utility network, (vii) at least one of operational metrics, availability and operational control parameters of the distributed generation power source, and (viii) at least one of operational metrics and operational control parameters of the integrated inverter and meter, and to receive from the communication device of the utility provider at least one of transmission conditions, rates, and requirements of the utility network.

13. The distributed generation system of claim 1 or claim 2,
wherein:
the inverter is connected to cabling terminals including at least one source terminal for receiving at least one of the distributed generation source power and AC source power from the utility provider, and a load terminal for (i) supplying at least one of the distributed generation source power and the AC power to a load at a site at which the inverter and meter are installed, and (ii) supplying the distributed generation source power to the utility provider; and
the communication mechanism is configured to route at least one power terminal of the inverter to at least one of (i) the source terminal of the cabling terminals, (ii) the load terminal of the cabling terminals, and (iii) a power terminal of the meter.

14. The distributed generation system of any one of the preceding claims, wherein the meter is configured to disconnect at least one load at the site, and to maintain a connection with the utility provider for injection of a predetermined amount of the distributed generation power into the utility grid, independent of whether at least one power terminal of the meter is connected to the utility provider to receive AC source power from the utility grid, the inverter being optionally configured to supply auxiliary power to at least one auxiliary load through an auxiliary contact between the integrated inverter and meter and the at least one auxiliary load, when the integrated inverter and meter disconnects the at least one load at the site.

15. The distributed generation system of any one of the preceding claims, wherein the integrated inverter and meter are contained in a single enclosure, or the meter and connection mechanism are contained in a first enclosure, and the inverter is at least partially contained in a second enclosure separated from the first enclosure, and optionally the first and second enclosures are connected to each other by at least one of AC cabling, DC cabling and communication cabling, for example, the inverter contained in the second enclosure is connected to the connection mechanism contained in the first enclosure by at least one of AC cabling, DC cabling and communication cabling.

16. The distributed generation system of any one of the preceding claims, wherein the integrated inverter and meter are configured to actively connect and disconnect at least one of a power terminal, a source terminal and a load terminal of at least one of the inverter and meter via a power switching mechanism.

17. The distributed generation system of any one of the preceding claims, wherein the connection mechanism comprises an intermediate connector configured to connect at least one of a source terminal and a load terminal to at least one of the meter and the inverter.

18. The distributed generation system of any one of the preceding claims, wherein the connection mechanism comprises a communication unit included in the inverter, the communication unit being configured to communicate with at least one of the meter and the communication device of the utility provider via at least one of a wireless protocol, AC cabling, DC cabling and communication cabling.

19. The distributed generation system of any one of the preceding claims, wherein the meter and inverter are connected in series via an AC mains panel including breakers.
